# EUROPEAN PATENT APPLICATION

(11) **EP 1 300 706 A1**
(43) Date of publication of application: **09.04.2003**
(21) Application number: 02013511.7
(22) Date of filing: 17.06.2002
(51) Int. Cl.: G02B 6/34

(54) **Optical deinterleaver**

(30) Priority: 05.10.2001 US 972803
(71) Applicant: Agilent Technologies Inc. (a Delaware Corporation), Palo Alto, CA 94306-2024 (US)
(72) Inventor: Lacey, Jonathan P., Mountain View, CA 94041-1318 (US); Lemoff, Brian E., Union City, CA 94587 (US); Trutna, William R., Jr., Atherton, CA 94027 (US); Rankin, Glenn H., Menlo Park, CA 94025 (US); Zhao, Peter P., Mountain View, CA 94043 (US); Wildnauer, Kenneth R., Santa Rosa, CA 95404-2207 (US)
(74) Representative: Schoppe, Fritz, Dipl.-Ing.

(57) **Abstract**

An interleaver (30, 50) implemented using a directional separator (32, 52) and Bragg grating sections is disclosed. Wavelength division multiplexed (WDM) signal (21) enters the interleaver (30, 50) and is directed from the input medium (11) to a first output medium (34). The first output medium (34) includes Bragg grating segments designed to reflect alternating channels of the WDM signal (21). The reflected channels (39) are directed to a second output medium (44).

## Description

### BACKGROUND

The present invention relates to optical communication devices. More specifically, the present invention relates to an optical interleaver for multiplexing optical signals.

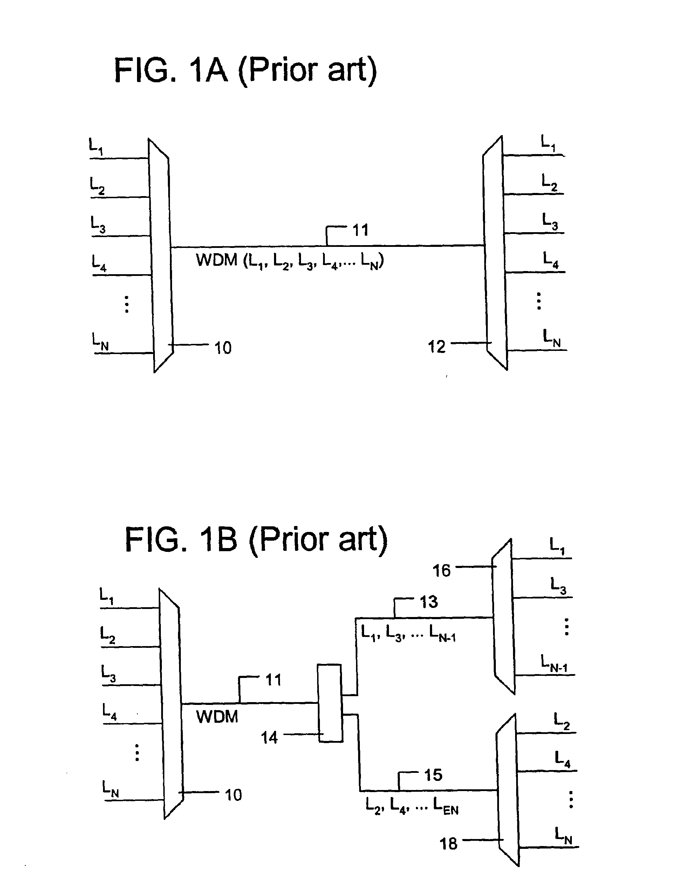

Often, to increase bandwidth (amount of data that can be passed along a communications channel in a given period of time) of optical communication channels such as optical fiber, many optical signals of varying wavelengths are multiplexed for transmission using a single optical fiber. This is commonly known as a wavelength division multiplexed (WDM) signal. Figure 1A illustrates a plurality of optical channels, or signals, L₁, L₂, ..., L_{N} multiplexed (by a multiplexer 10) as a single WDM signal carried by a first optical medium, for example optical fiber 11. The wavelength of the optical carrier of signal L2 is longer than the wavelength of the optical carrier of signal L1, and so on. Then, a demultiplexer 12 is used to separate the individual channels of the WDM signal. Increasingly, the channels of the WDM signal are closely packed in the frequency spectrum. For example, frequency spacing between the channels L₁, L₂... L_{N} may be 100 GHz, 50 GHz, or even less. Such a tightly packed WDM signal requires a complex and difficult-to-build demultiplexer 12. It is especially difficult to build demultiplexing devices with high resolution and high spectral efficiency to separate broad, closely spaced channels.

To reduce the complexity, and eventually the cost, of the demultiplexer 12, interleavers are used to increase the space, in the frequency spectrum, between the channels. An interleaver is a three-port wavelength-separation device that splits a WDM signal into even and odd channels. Figure 1B illustrates the use of an interleaver 14 to split the WDM signal into an odd-channel WDM signal (carried in a second medium 13 toward a first output port) including the odd channels L₁, L₃, ..., L_{N-1} of the WDM signal and an even-channel WDM signal (carried in a third medium 15 toward a second output port) including the even channels L₂, L₄, ..., L_{N} of the WDM signal. Consequently, the frequency spacing between the channels of each of the split WDM signals (of fibers 13 and 15) is twice as wide as the frequency spacing of the input WDM signal. Therefore, the demultiplexers 16 and 18 are comparatively easier to build, thus less costly.

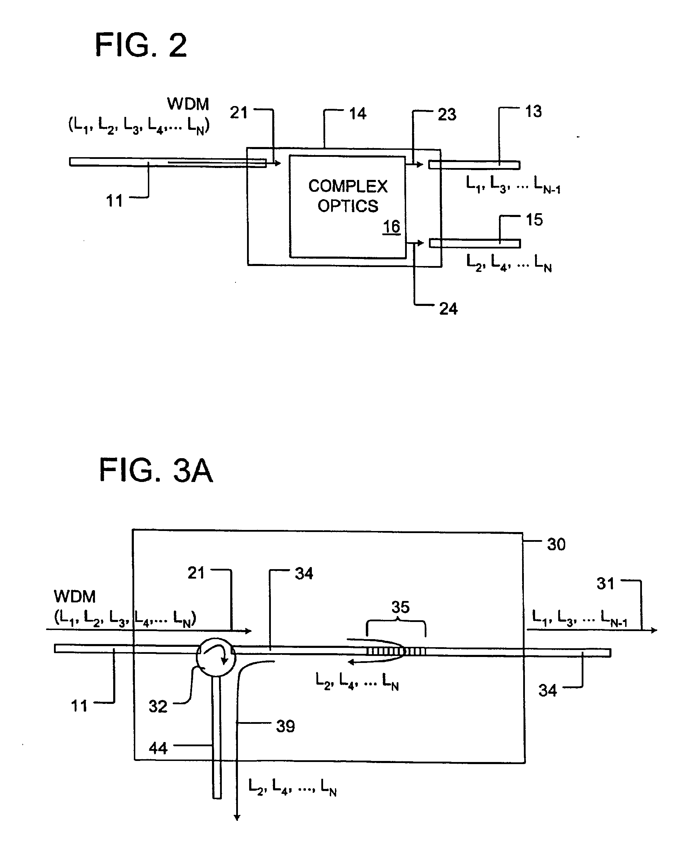

However, the interleavers, as used in the current state of the art, are difficult to build and have various shortcomings. The interleaver 14 of Figure 1B is illustrated in greater detail in Figure 2A. In this example of a prior art interleaver 14, the incoming WDM signal 21 leaves the first fiber 14 and is separated to odd 23 and even 24 signal channels (collectively, "separated signals" 23 and 24) by intricate arrangements of various combinations of optical devices such as lenses, mirrors, crystals, rotators, wave guides, reflectors, polarizers, beam splitters, filters, and collimators (collectively illustrated as a box 16). For example, see U.S. Patent Nos. 6,130,971 (granted to Cao) and 6,212,313 (granted to Li) for interleavers implemented using complex and intricate configuration of optical devices. Finally, the separated odd 23 and even 24 channels (each channel being a light beam) are inserted into output optical fibers 13 and 15 respectively. Here, the WDM signal 21, the odd channels of the WDM signal 23, and the-even channels of the WDM signal 24 are illustrated using directional arrows in Figure 2A. These arrows are used to indicate the general direction of the signals and not used to indicate ray traces of optics art.

One shortcoming of the prior art interleavers is that there is a relatively high insertion loss when the separated signals 23 and 24 are directed into the output fibers 13 and 15, respectively. This is because the optical arrangement 16 is a free-space or planar wave-guide device having coupling losses. More importantly, the interleaver 14 is difficult and costly to manufacture because the free-space optical arrangement 16 and the output fibers 13 and 15 must be aligned such that each of the separated signals 23 and 24 is lined-up to enter core of the output fibers 13 and 15. The core of each of the output fibers 13 and 15 is typically no more than 10 microns in diameter. Due to the difficulty of the alignments, manufacturing and packaging of interleavers are very costly.

Accordingly, there remains a need for an interleaver that eliminates or reduces the shortcomings of the current-art interleavers as discussed above.

### SUMMARY

These needs are met by the present invention. According to a first aspect of the present invention, an interleaver includes a circulator for directing an incoming wavelength division multiplexed (WDM) signal from a first signal medium to a second signal medium. The second signal medium has a grating section to reflect a portion of the WDM signal toward the circulator. The circulator directs the reflected signals to a third signal medium.

According to a second aspect of the present invention, an optical device includes an input means for receiving a wavelength division multiplexed (WDM) signal including at least four different wavelength optical channels referable as L1, L2, L3, and L4. The device also includes means for directing the WDM signal from the input means to a first output means. The first output means has grating to reflect even signal channels L2 and L4 back to the directing means. The directing means directs the reflected signals L2 and L4 to a second output means.

According to a third aspect of the present invention, a method of separating a wavelength division multiplexed (WDM) signal including a plurality of channels is described. First, the WDM signal is directed from a first medium to a second medium via a circulator. Then, alternating channels of the WDM signal are reflected back toward the circulator. Finally, reflected channels are directed to a third medium.

According to a fourth aspect of the present invention, an apparatus includes a first signal medium for receiving a wavelength division multiplexed (WDM) signal and means for separating the WDM signal into even channels and odd channels, the means comprising at least one Bragg grating.

According to a fifth aspect of the present invention, a method of separating a wavelength division multiplexed (WDM) signal including a plurality of channels is disclosed. First, odd and even channels are separated using one or more Bragg gratings. The odd channels are directed toward a first output and the even channels are directed toward a second output.

According to a fifth aspect of the present invention, an apparatus includes a first coupler for receiving a wavelength division multiplexed (WDM) signal including a plurality of channels. The first coupler directs a first portion of the WDM signal into a first path and a second portion of the WDM signal into a second path. The first path includes a first grating section reflecting odd channels of the first portion of the WDM signal. The second path includes a second grating section reflecting odd channels of the second portion of the WDM signal. The first coupler combines the reflected odd channels from the first path and the reflected odd channels from the second path. The combined odd channels are directed toward an output of the first coupler. A second coupler combines even channels of the first portion of the WDM signal received from the first path and even channels of the second portion of the WDM signal received from the second path. The combined even channels are directed toward an output of the second coupler.

Other aspects and advantages of the present invention will become apparent from the following detailed description, taken in combination with the accompanying drawings, illustrating by way of example the principles of the invention.

### BRIEF DESCRIPTION OF THE DRAWINGS

Figure 1A illustrates transmission of multiple optical channels using multiplexing and demultiplexing techniques;

Figure 1B illustrates transmission of multiple optical channels using multiplexing, interleaving, and demultiplexing techniques;

Figure 2 illustrates the interleaver of Figure 1B;

Figure 3A illustrates an apparatus according to a first embodiment of the present invention;

Figure 3B illustrates an apparatus according to a second embodiment of the present invention;

Figure 4 illustrates an apparatus according to a third embodiment of the present invention; and

Figure 5 illustrates an interleaver according to a fourth embodiment of the present invention.

### DETAILED DESCRIPTION

As shown in the drawings for purposes of illustration, the present invention is embodied in an optical apparatus including a directional separator for directing an incoming wavelength division multiplexed (WDM) signal from a first signal medium to a second signal medium. The second signal medium has multiple grating sections to reflect a portion of the WDM signal toward the circulator. The directional separator directs the reflected signals to a third signal medium. Because the incoming WDM signal does not leave various media, the signal need not be re-inserted into the output fibers (the second and the third signal medium). Consequently, the insertion loss is minimized and alignment and packaging problems are eliminated.

Referring to Figure 3A, an apparatus 30 according to one embodiment of the present invention is illustrated. In this embodiment, the apparatus 30 is an interleaver 30. The WDM signal 21 enters the interleaver 30 via a first signal medium 11 such as an optical fiber or a wave-guide. Here, the phrase "signal medium" includes, without limitation, optical fiber (or "fiber") and wave-guide. The WDM signal 21 includes N channels, or signals, referable to as L₁, L₂, L₃, L₄, ..., L_{N}, with each channel at a unique optical frequency relative to the other channels of the WDM signal 21. Typically, but not necessarily, N is an even number. The medium 11 is connected to a directional separator 32 that directs the incoming WDM signal 21 to a second signal medium 34. For example, the directional separator 32 can be a circulator 32. Circulators are known in the art.

The second signal medium 34 includes a grating section 35 to reflect a portion of the WDM signal 21 back toward the circulator 32. In the present example, the grating section includes a sampled Bragg grating such that all odd channels of the WDM signal 21 or all even channels of the WDM signal 21, but not both, are reflected back toward the directional separator 32. Sampled Bragg gratings are known in the art, and are described, for example, in *Ibsen, M.; Eggleton, B.J.; Sceats, M.G.; Ouellette, F.:* "Broadly tunable DBR fibre laser using sampled fibre Bragg gratings," Electronics Letters, Volume 31 Issue 1, 5 Jan. 1995 Page(s): 37-38. The reflected channels are directed to a third signal medium 44 as indicated by directional ray 39. In the illustrated example, all even channels are reflected by the grating section 35.

The result is that, the second signal medium 34 also serves as an a first output port, or means, 34 of the interleaver 30 for reflecting a portion (every other channels, for example even channels in the Figure) of the WDM signal 21 back toward the circulator 32 while allowing non-reflected portions (odd channels in the illustrated example) of the WDM signal 21 to pass through the interleaver 30 as a first output signal 31. In the example, the first output signal 31 includes signals L₁, L₃, ..., L_{N-1}.

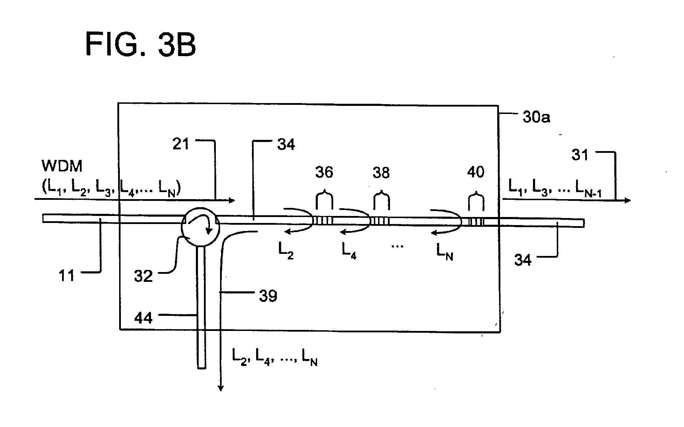

As illustrated in Figure 3B, in an alternative embodiment, the grating section 35 of Figure 3A is implemented as a series of Bragg grating sections 36, 38, and 40. Figure 3B illustrates an alternative embodiment of the apparatus having certain alternate configuration. Portions of this embodiment is similar to those shown in Figure 3A. For convenience, components in Figure 3B that are similar to components in Figure 3A are assigned the same reference numerals, analogous but changed components are assigned the same reference numerals accompanied by letter "a" and different components are assigned different reference numerals. In Figure 3B, the interleaver 30a has the series of Bragg grating sections 36, 38, and 40. The Bragg grating sections 36, 38, and 40 are designed, for instance using apodization, to produce a flat, sharp-edged (ideally "top-hat") passband of spectral width. The Bragg grating sections 36, 38, and 40 can be designed so that there is constant group delay across each passband spectrum. Alternatively, the Bragg grating sections 36, 38, and 40 can be designed so that there is a change in group delay across the passband spectrum (that is, chromatic dispersion) that undoes some or all of the chromatic dispersion of the preceding transmission fiber. The propagation speed of signals (or, inversely, their so-called group delay) through an optical fiber depends on their wavelength. This phenomenon is known as chromatic dispersion, and it causes pulse broadening, and hence overlap between adjacent pulses, which results in errors in distinguishing transmitted digital ones from digital zeroes. A pulse that has dispersed as a result of traveling through optical fiber can be returned to its original undispersed shape by passing it through a device or material with equal and opposite dispersion, for example a specially-designed fiber Bragg grating.

In the illustrated example, the first grating section 36 reflects the channel L₂, the second grating section 38 reflects the channel L₄, and so on until the final grating section 40 reflects channel L_{N}. Here, the sections 36, 38, and 40 are designed to reflect alternating channels of the WDM signal 21. The reflected channels are directed to a third signal medium 44 as indicated by directional ray 39. The result is that, the second signal medium 34 also serves as an a first output means 34 of the interleaver 30 for reflecting a portion of the WDM signal 21 back toward the circulator 32 while allowing non-reflected portions of the WDM signal 21 to pass through the interleaver 30 as a first output signal 31. In the example, the first output signal 31 includes signals L₁, L₃, ..., L_{N-1}. The circulator 32 in the present invention represents any device, apparatus, or means for separating and redirecting the reflected signals L₂, L₄, ..., L_{N} from the incident input WDM signal 21.

Likewise, the third signal medium 44 also serves a second output port, or means, 44 of the interleaver 30 for carrying the alternating channels reflected by the sections 36, 38, and 40 of the second signal medium 34 and directed, by the circulator 32, to the third signal medium 44. The reflected channels directed to the third signal medium 44 are a second output signal 39 of the interleaver 30. In the example, the second output signal 39 includes channels L₂, L₄, ..., L_{N}. If the channels of the WDM signal 21 were spaced at 50 GHz, then the spacing of the channels of the first output signal 31 is at 100 GHz, and the spacing of the channels of the second output signal 39 is at 100 GHz.

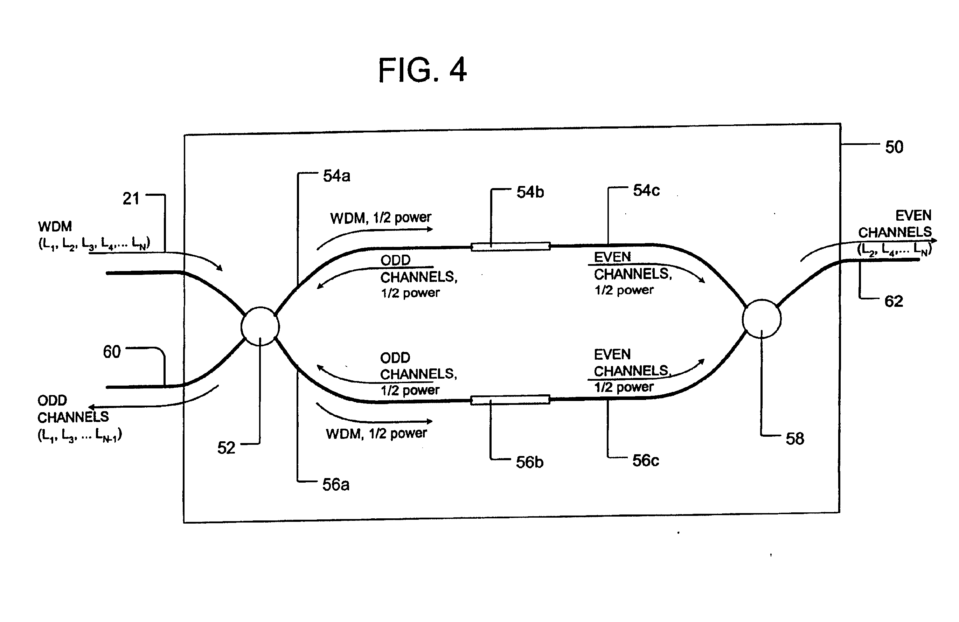

Yet another embodiment of the present invention is illustrated by Figure 4. An apparatus 50 includes a first coupler 52 for receiving a WDM signal 21 including a plurality of channels referable as channels L₁, L₂, L₃, L₄, ..., L_{N}. The first coupler 52 directs the WDM signal 21 to a first path and a second path. Such couplers are known in the art: see for example www.adc.com.

The first path includes signal medium 54a, a first grating section 54b, and signal medium 54c, all serially connected, the first path collectively referred to using reference number 54. The second path includes signal medium 56a, a second grating section 56b, and signal medium 56c, all serially connected, the second path collectively referred to using reference number 54. Here, the channels of the WDM signal 21 are not separated, but all the channels of the WDM signal 21 are directed toward both the signal media 54a and 56a. However, the power of the WDM signal 21 is divided equally between the media 54a and 56a where these media carry ½ of the power of the incoming WDM signal 21 toward their respective grating sections 54b and 56b with the medium 54a carrying a first portion of the WDM signal 21 and the medium 56a carrying a second portion of the WDM signal 21. Each of the grating sections 54b and 56b reflects odd channels of the half-powered WDM signal (or even channels depending upon implementation) and allows even channels (or odd channels) to be transmitted toward a second coupler 58.

The reflected odd channels (and their powers) from the first grating section 54b and from the second grating section 56b are combined by the first coupler 52. Their relative phases are controlled (by controlling the lengths of the coupler arms) so that the combined odd channels are directed toward an output medium 60 of the first coupler 52.

The transmitted even channels form the first path 54 and from the second path 56 are combined by the second coupler 58. Their relative phases are controlled (by controlling the lengths of the coupler arms) so that they are directed toward an output medium 62 of the second coupler 58.

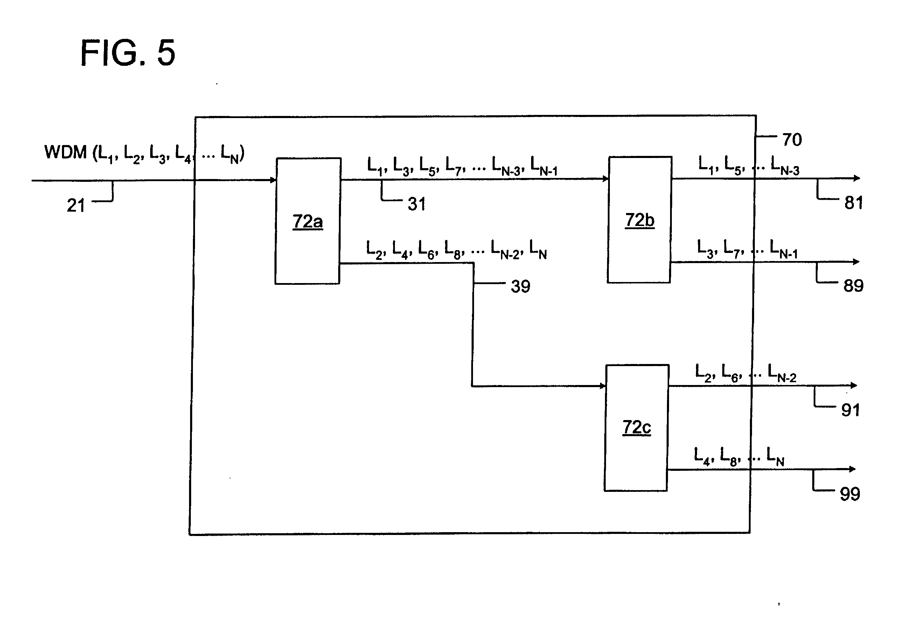

The interleavers 30 of Figure 3A or 50 of Figure 4 can be cascaded to further separate the channels of the WDM signal 21. Figure 5 illustrates one embodiment of the cascaded interleaver 70 including a cascaded configuration of interleavers 72a, 72b, and 72c implemented according to the present invention. Referring to Figure 5, the cascaded interleaver 70 includes multiple instances of the interleaver 72, each interleaver 72 implemented according to the present invention.

A first instance interleaver 72a separates the incoming WDM signal 21 into a first output signal 71 (odd channels) and a second output signal 79 (even channels) as discussed in connection with Figures 3A and 4. In this example, N is an integer greater than equal to eight and is divisible by four. Theoretically, N can be any number greater than one. In practice, N is often 64 or larger.

The first output signal 71 acts as input to a second instance interleaver 72b that separates the first output signal 71 into a third output signal 81 (odd channels of the first output signal 71) and a fourth output signal 89 (even channels of the first output signal 71).

The second output signal 79 acts as input to a third instance interleaver 72c that separates the second output signal 79 into a fifth output signal 91 (odd channels of the second output signal 79) and a sixth output signal 99 (even channels of the second output signal 79).

Using the cascaded interleaver 70, the channels of the WDM signal 21 having 50 GHz spacing can be separated into output signals 81, 89, 91, and 99, each output signal having channels with 200 GHz spacing.

From the foregoing, it will be appreciated that the apparatus and the methods of the present invention is novel and offers advantages over the current art. Although specific embodiment of the invention are described and illustrated above, the invention is not to be limited to the specific forms or arrangements of parts so described and illustrated. For example, in the above sample embodiments of the present invention, roles of the odd channels and the even channels can be reversed and still be within the scope of the present invention. The invention is limited only by the claims.

## Claims

1. An apparatus (30) comprising:
a circulator (32) for directing an incoming wavelength division multiplexed (WDM) signal (21) from a first signal medium (11) to a second signal medium (34);
the second signal medium (34) having a grating section (35) to reflect a portion (39) of the WDM signal (21) toward the circulator (32); and
the circulator (32) directing the reflected signals (39) to a third signal medium (44).

2. The apparatus (30) recited in claim 1 wherein the second signal medium (34) reflects every other channel of the WDM signal (21).

3. The apparatus (30) recited in claim 1 wherein the grating section (35) includes sampled Bragg grating.

4. An optical device (30) comprising:
input means (11) for receiving wavelength division multiplexed (WDM) signal (21) including at least four different wavelength optical channels referable as L₁, L₂, L₃, and L₄;
means (32) for directing the WDM signal (21) from the input means (11) to a first output means (34);
the first output means (34) having a grating (35) to reflect even signal channels L₂ and L4 back to the directing means (32); and
the directing means (32) directing the reflected signals L₂ and L₄ to a second output means (44).

5. A method of separating a wavelength division multiplexed (WDM) signal (21) including a plurality of channels, the method comprising:
directing the WDM signal (21) from a first medium (21) to a second medium (44) via a circulator (32);
reflecting alternating channels (39) of the WDM signal (21) back toward the circulator (32); and
directing the reflected channels (39) to a third medium (44).

6. The method recited in claim 5 wherein the alternating channels (39) reflect on Bragg grating sections of the second medium (34).

7. An apparatus (50) comprising:
a first signal medium for receiving a wavelength division multiplexed (WDM) signal (21); and
means (54b, 56b) for separating the WDM signal into even channels and odd channels, the means (54b, 56b) comprising at least one Bragg grating.

8. The apparatus (50) recited in claim 7 further comprising a directional separator (52) to direct the even channels to a first output port (60) and the odd channels to a second output port (52).

9. The apparatus (50) recited in claim 8 wherein the directional separator (52) comprises a circulator.

10. The apparatus (50) recited in claim 8 wherein the directional separator (52) comprises a coupler.
